# FASCICULE DE BREVET EUROPEEN

(11) **EP 1 132 351 B1**
(45) Date de publication et mention de la délivrance du brevet: **12.01.2005**
(21) Numéro de dépôt: 01106093.6
(22) Date de dépôt: 13.09.1996
(51) Int. Cl.: C03C 17/00, C03C 8/20, C03C 17/34

(54) **Substrat à revetement photocatalytique**
Substrat mit photokatalytischer Beschichtung
Substrate with photocatalytic coating

(30) Priorité: 15.09.1995 FR 9510839
(43) Date de publication de la demande: 12.09.2001
(62) Demande divisionnaire de: 96931839.3
(73) Titulaire: SAINT-GOBAIN GLASS FRANCE, 92400 Courbevoie (FR)
(72) Inventeur: Boire, Philippe, 75015 Paris (FR); Talpaert, Xavier, 75019 Paris (FR)
(74) Mandataire: Renous Chan, Véronique

(56) Documents cités:
- EP-A- 0 544 577
- EP-A- 0 581 216
- US-A- 4 232 062
- DATABASE WPI Week 23 Derwent Publications Ltd., London, GB; AN 88-158890 XP002005574 & JP 63 100042 A (NIPPON SHEET GLASS KK), 2 mai 1988 (1988-05-02)
- M.TAKAHASHI ET AL.: "pt-tio2 thin films on glass substrates as efficient photocatalysts" JOURNAL OF MATERIALS SCIENCE, vol. 24, no. 1, janvier 1989 (1989-01), pages 243-246, XP000046035 LONDON GB
- CHEMICAL ABSTRACTS, vol. 116, no. 10, 9 mars 1992 (1992-03-09) Columbus, Ohio, US; abstract no. 89812a, page 396; XP000405429 & SU 1 663 046 A (SCIENTIFIC RESEARCH INSTITUTE OF PHYSICAL CHEMICAL PROBLEMS MINSK) 15 juillet 1991 (1991-07-15)

## Description

L'invention concerne des substrats à base verrière, céramique ou vitrocéramique, plus particulièrement en verre, notamment transparents, que l'on munit de revêtements à propriétés photo-catalytiques, en vue de fabriquer des vitrages d'applications diverses, comme les vitrages utilitaires, vitrages pour véhicules ou pour bâtiments.

De plus en plus, on cherche à fonctionnaliser les vitrages en déposant à leur surface des couches minces destinées à leur conférer une propriété particulière selon l'application visée. Ainsi, il existe des couches à fonction optique, comme les couches dites anti-reflet composées d'un empilement de couches alternativement à haut et bas indices de réfraction. Pour une fonction anti-statique, ou chauffante du type anti-givre, on peut aussi prévoir des couches minces conductrices électriquement, par exemple à base de métal ou d'oxyde métallique dopé. Pour une fonction thermique, de bas-émissivité ou anti-solaire par exemple, on peut se tourner vers des couches minces en métal du type argent ou à base de nitrure ou d'oxyde métallique. Pour obtenir un effet « anti-pluie », peuvent être prévues des couches à caractère hydrophobe, par exemple à base d'organo-silane fluoré ...

Cependant, il existe encore un besoin pour un substrat, notamment un vitrage que l'on pourrait qualifier « d'anti-salissures », c'est-à-dire visant la permanence dans le temps des propriétés d'aspect et de surface, et permettant notamment d'espacer les nettoyages et/ou d'améliorer la visibilité, en parvenant à éliminer au fur et à mesure les salissures se déposant progressivement à la surface du substrat, notamment les salissures d'origine organique comme les traces de doigts ou des produits organiques volatils présents dans l'atmosphère, ou même des salissures du type buée.

Or on sait qu'il existe certains matériaux semi-conducteurs, à base d'oxyde métallique, qui sont aptes, sous l'effet d'un rayonnement de longueur d'onde adéquate, à initier des réactions radicalaires provoquant l'oxydation de produits organiques : on parle en général de matériaux « photo-catalytiques » ou encore « photo-réactifs ».

L'invention a alors pour but la mise au point de revêtements photo-catalytiques sur substrat, qui présentent un effet « anti-salissures » marqué vis-à-vis du substrat et que l'on puisse fabriquer de manière industrielle.

L'invention a pour objet un substrat à base verrière, céramique ou vitrocéramique, notamment en verre et transparent, muni sur au moins une partie d'au moins une de ses faces d'un revêtement à propriété photo-catalytique comportant de l'oxyde de titane au moins partiellement cristallisé. L'oxyde de titane est cristallisé « in situ », lors de la formation du revêtement sur le substrat. Le revêtement constitue la dernière couche d'un empilement de couches antireflets.

L'oxyde de titane fait en effet partie des semi-conducteurs qui, sous l'action de la lumière dans le domaine visible ou des ultraviolets, dégradent des produits organiques qui se déposent à leur surface. Choisir l'oxyde de titane pour fabriquer un vitrage à effet « anti-salissures » est donc particulièrement indiqué, et ce d'autant plus que cet oxyde présente une bonne résistance mécanique et chimique : pour être efficace longtemps, il est évidemment important que le revêtement conserve son intégrité, alors même qu'il se trouve directement exposé à de nombreuses agressions, notamment lors du montage du vitrage sur chantier (bâtiment) ou sur ligne de production (véhicule), ce qui implique des manipulations répétées par des moyens de préhension mécaniques ou pneumatiques, et également une fois le vitrage en place, avec des risques d'abrasion (essuie-glace, chiffon abrasif) et de contact avec des produits chimiques agressifs (polluants atmosphériques du type SO₂, produit d'entretien, ...).

Le choix s'est porté, en outre, sur un oxyde de titane qui soit moins partiellement cristallisé parce qu'il a été montré qu'il était beaucoup plus performant en termes de propriété photo-catalytique que l'oxyde de titane amorphe. De préférence, il est cristallisé sous forme anatase, sous forme rutile ou sous forme d'un mélange d'anatase et de rutile, avec un taux de cristallisation d'au moins 25%, notamment d'environ 30 à 80%, notamment près de la surface, (la propriété étant plutôt une propriété de surface). (On comprend par taux de cristallisation la quantité en poids de TiO₂ cristallisé par rapport à la quantité en poids totale de TiO₂ dans le revêtement).

On a également pu observer, notamment dans le cas d'une cristallisation sous forme anatase, que l'orientation des cristaux de TiO₂ croissant sur le substrat avait une influence sur les performances photo-catalytiques de l'oxyde : il existe une orientation privilégiée (1,1,0) qui favorise nettement la photocatalyse.

. Avantageusement, la fabrication du revêtement est opérée de manière à ce que l'oxyde de titane cristallisé qu'il contient se trouve sous forme de « cristallites », au moins près de la surface, c'est-à-dire de monocristaux, ayant une taille moyenne comprise entre 0,5 et 100 nm, de préférence 1 à 50 nm, notamment 10 à 40 nm, plus particulièrement entre 20 et 30 nm. C'est en effet dans cette gamme de dimension que l'oxyde de titane paraît avoir un effet photo-catalytique optimal, vraisemblablement parce que les cristallites de cette taille développent une surface active importante.

Comme on le verra plus en détail ultérieurement, on peut obtenir le revêtement à base d'oxyde de titane de multiples façons :
□ par décomposition de précurseurs de titane (techniques de pyrolyse : pyrolyse liquide, pyrolyse de poudre, pyrolyse en phase valeur dite CVD (Chemical Vapor Deposition), techniques associées au sol-gel : trempé ou dipping, cell-coating,...),
□ par une technique sous vide (pulvérisation cathodique réactive ou non).

Le revêtement peut comporter également, outre l'oxyde de titane cristallisé, au moins un autre type de matériau minéral, notamment sous forme d'un oxyde amorphe ou partiellement cristallisé, par exemple un oxyde de silicium (ou mélange d'oxydes), de titane, d'étain, de zirconium ou d'aluminium. Ce matériau minéral peut aussi participer à l'effet photocatalytique de l'oxyde de titane cristallisé, en présentant lui-même un certain effet photocatalytique, même faible par rapport à celui du TiO₂ cristallisé, ce qui est le cas de l'oxyde d'étain ou de l'oxyde de titane amorphe.

Une couche d'oxyde « mixte » combinant ainsi de l'oxyde de titane au moins partiellement cristallisé à au moins un autre oxyde peut être intéressante sur le plan optique, tout particulièrement si l'autre ou les autres oxydes sont choisis d'indice inférieur à celui du TiO₂ : en abaissant l'indice de réfraction « global » du revêtement, on peut jouer sur la réflexion lumineuse du substrat muni du revêtement, notamment abaisser cette réflexion. C'est le cas si, par exemple, on choisit une couche en TiO₂/Al₂O₃, dont un mode d'obtention est décrit dans le brevet EP-0 465 309, ou en TiO₂/SiO₂. Il est nécessaire, bien sûr, que le revêtement contienne cependant une teneur en TiO₂ suffisante pour conserver une activité photocatalytique notable. On considère, ainsi, qu'il est préférable que le revêtement contienne au moins 40% en poids, notamment au moins 50% en poids de TiO₂ par rapport au poids total d'oxyde(s) dans le revêtement.

On peut aussi choisir de superposer au revêtement selon l'invention une couche oléophobe et/ou hydrophobe greffée stable ou résistant à la photocatalyse, par exemple à base de l'organo-silane fluoré décrit dans les brevets US-5 368 892 et US-5 389 427, ainsi que du perfluoroalkylsilane décrit dans la demande de brevet FR-94/08734 du 13 juillet 1994 publiée sous le suméro FR-2 722 493 et correspondant au brevet européen EP-0 692 463, notamment de formule :

CF₃-(CF₂)ₙ-(CH₂)ₘ-SiX₃

dans laquelle n est de 0 à 12, m est de 2 à 5 et X est un groupe hydrolysable.

Pour amplifier l'effet photocatalytique de l'oxyde de titane du revêtement selon l'invention, on peut tout d'abord augmenter la bande d'absorption du revêtement, en incorporant au revêtement d'autres particules notamment métalliques et à base de cadmium, d'étain, de tungstène, de zinc, de cérium, ou de zirconium.

On peut aussi augmenter le nombre de porteurs de charge par dopage du réseau cristallin de l'oxyde de titane, en y insérant au moins un des éléments métalliques suivants : niobium, tantale, fer, bismuth, cobalt, nickel, cuivre, ruthénium, cérium, molybdène.

Ce dopage peut aussi se faire par un dopage de surface seulement de l'oxyde de titane ou de l'ensemble du revêtement, dopage de surface réalisé en recouvrant au moins une partie du revêtement d'une couche d'oxydes ou de sels métalliques, le métal étant choisi parmi le fer, le cuivre, le ruthénium, le cérium, le molybdène, le vanadium et le bismuth.

Enfin, on peut amplifier le phénomène photocatalytique en augmentant le rendement et/ou la cinétique des réactions photocatalytiques, en recouvrant l'oxyde de titane, ou au moins une partie du revêtement qui l'incorpore, par un métal noble sous forme de couche mince du type platine, rhodium, argent, palladium.

Un tel catalyseur, par exemple déposé par une technique sous vide, permet en fait d'augmenter le nombre et/ou la durée de vie des entités radicalaires créées par l'oxyde de titane, et ainsi de favoriser les réactions en chaîne conduisant à la dégradation de produits organiques.

De manière tout-à-fait surprenante, le revêtement présente en fait non pas une propriété mais deux, dès qu'il est exposé à un rayonnement adéquat comme dans le domaine du visible et/ou les ultraviolets, tel qu.'un rayonnement solaire : par la présence d'oxyde de titane photocatalytique, comme déjà vu, il favorise la disparition progressive, au fur et à mesure de leur accumulation, de salissures d'origine organique, en provoquant leur dégradation par un processus d'oxydation radicalaire. Les salissures minérales ne sont, elles, pas dégradées par ce processus : elles restent donc sur la surface, et, à part certaines cristallisations, elles sont en partie facilement évacuées puisqu'elles n'ont plus de raison d'adhérer à la surface, les agents organiques collants étant dégradés par photocatalyse.

Mais le revêtement de l'invention, s'auto-nettoyant en permanence, présente également de préférence une surface extérieure à caractère hydrophile et/ou oléophile prononcé, ce qui induit trois effets très avantageux :
□ un caractère hydrophile permet un mouillage parfait de l'eau qui peut se déposer sur le revêtement. Quand un phénomène de condensation de l'eau se produit, au lieu d'un dépôt de gouttelettes d'eau sous forme de buée gênant la visibilité, on a en fait un mince film continu d'eau qui se forme à la surface du revêtement et qui est tout-à-fait transparent. Cet effet « anti-buée » est notamment démontré par la mesure d'un angle de contact à l'eau inférieur à 5°après exposition à la lumière, et,
□ après ruissellement d'eau, de pluie notamment, sur une surface non traitée par une couche photocatalytique, de nombreuses gouttes d'eau de pluie restent accrochées sur la surface et laissent, une fois évaporées, des traces inesthétiques et gênantes, d'origine principalement minérale. En effet, une surface exposée à l'air ambiant se recouvre rapidement d'une couche de salissure qui limite son mouillage par l'eau. Ces salissures viennent s'ajouter aux autres salissures, notamment minérales (cristallisations, ...) apportées par l'atmosphère dans laquelle baigne le vitrage. Dans le cas d'une surface photoréactive, ces salissures minérales ne sont pas directement dégradées par photocatalyse. En fait, elles sont en très grande partie éliminées grâce au caractère hydrophile induit par l'activité photocatalytique. Ce caractère hydrophile provoque en effet un étalement parfait des gouttes de pluie. Les traces d'évaporation ne sont donc plus présentes. De plus, les autres salissures minérales présentes sur la surface sont lavées, ou redissoutes dans le cas de cristallisation, par le film d'eau et donc en grande partie évacuées. On obtient un effet « anti-salissure minérale » notamment induit par la pluie,
□ conjointement à un caractère hydrophile, le revêtement peut aussi présenter un caractère oléophile, permettant le « mouillage » des salissures organiques qui, comme pour l'eau, tendent alors à se déposer sur le revêtement sous forme d'un film continu moins visible que des « taches » bien localisées. On obtient ainsi un effet « anti-salissures organiques » qui s'opère en deux temps : dès qu'elle se dépose sur le revêtement, la salissure est déjà peu visible. Ensuite, progressivement, elle disparaît par dégradation radicalaire amorcée par photo-catalyse.

Le revêtement peut être choisi de surface plus ou moins lisse. Une certaine rugosité peut en effet être avantageuse :
□ elle permet de développer une surface photocatalytique active plus grande et donc elle induit une plus grande activité photocatalytique,
□ elle a une influence directe sur le mouillage. La rugosité exalte en effet les propriétés de mouillage. Une surface lisse hydrophile sera encore plus hydrophile une fois rendue rugueuse. On comprend par « rugosité », ici, aussi bien la rugosité de surface, que la rugosité induite par une porosité de la couche dans au moins une partie de son épaisseur.

Les effets précédents seront d'autant plus marqués que le revêtement est poreux et rugueux, d'où un effet superhydrophile des surfaces photoréactives rugueuses. Cependant, trop prononcée, la rugosité peut être pénalisante en favorisant l'incrustation, l'accumulation des salissures et/ou en faisant apparaître un niveau de flou inacceptable optiquement.

Il s'est ainsi avéré intéressant d'adapter le mode de dépôt des revêtements à base de TiO₂ de manière à ce qu'ils présentent une rugosité d'environ 2 à 20 nm, de préférence de 5 à 15 nm, cette rugosité étant évaluée par microscopie à force atomique, par mesure de la valeur de l'écart quadratique moyen (dit « Root Mean Square ou RMS en anglais) sur une surface de 1 micromètre carré. Avec de telles rugosités, les revêtements présentent un caractère hydrophile se traduisant par un angle de contact à l'eau pouvant être inférieur à 1°. On a également constaté qu'il était avantageux de favoriser une certaine porosité dans l'épaisseur du revêtement. Ainsi, si le revêtement n'est constitué que de TiO₂, il présente de préférence une porosité de l'ordre de 65 à 99%, notamment de 70 à 90%, la porosité étant définie ici de manière indirecte par le pourcentage de la densité théorique du TiO₂, qui est d'environ 3,8. Pour favoriser une telle porosité, un moyen consiste, par exemple, à déposer le revêtement par une technique du type sol-gel, impliquant la décomposition de matériaux de type organo-métalliques : on peut alors introduire dans la solution, outre le ou les précurseur(s) organo-métallique(s), un polymère organique du type polyéthylène glycol PEG : en durcissant la couche par chauffage, on brûle le PEG, ce qui engendre ou amplifie une certaine porosité dans l'épaisseur de la couche.

L'épaisseur du revêtement selon l'invention est variable, elle est de préférence comprise entre 5 nm et 1 micron, notamment entre 5 et 100 nm, notamment entre 10 et 80 nm, ou entre 20 et 50 nm. En fait, le choix de l'épaisseur peut dépendre de différents paramètres, notamment de l'application envisagée du substrat du type vitrage, ou encore de la taille des cristallites de TiO₂ dans le revêtement ou de la présence d'alcalins en forte proportion dans le substrat.

Entre le substrat et le revêtement selon l'invention, on peut disposer une ou plusieurs autres couches minces à fonction différente ou complémentaire de celle du révétement. Il peut s'agir, notamment, de couches à fonction anti-statique, thermique, optique, ou favorisant la croissance cristalline de TiO₂ sous forme anatase ou rutile, ou de couches faisant barrière à la migration de certains éléments provenant du substrat, notamment faisant barrière aux alcalins et tout particulièrement aux ions sodium quand le substrat est en verre.

Dans un empilement de couches « anti-reflets » alternant des couches minces à haut et bas indices, le revêtement selon l'invention constituant la dernière couche de l'empilement. Dans ce cas, il est préférable que le revêtement soit d'indice de réfraction relativement peu élevé, ce qui est le cas quand il est constitué d'un oxyde mixte de titane et de silicium.

La couche à fonction anti-statique et ou thermique (chauffante en la munissant d'amenées de courant, bas-émissive, anti-solaire, ...) peut notamment être choisie à base d'un matériau conducteur du type métal, comme l'argent, ou du type oxyde métallique dopé comme l'oxyde d'indium dopé à l'étain ITO, l'oxyde d'étain dopé avec un halogène du type fluor SnO₂:F, ou avec de l'antimoine SnO₂:Sb, ou de l'oxyde de zinc dopé à l'indium ZnO:ln, au fluor ZnO:F, à l'aluminium ZnO:Al ou à l'étain ZnO:Sn. Il peut aussi s'agir d'oxydes métalliques sous-stoechiométriques en oxygène, comme SnO₂₋ₓ ou ZnO₂ₓ avec x < 2.

La couche à fontion anti-statique a de préférence une valeur de résistance carrée de 20 à 1000 ohms/carré. On peut prévoir de la munir d'amenées de courant afin de la polariser (tensions d'alimentation par exemple comprises entre 5 et 100V). Cette polarisation contrôlée permet notamment de lutter contre le dépôt de poussières de taille de l'ordre du millimètre susceptibles de se déposer sur le revêtement, notamment des poussières sèches adhérentes que par effet électro-statique : en inversant brutalement la polarisation de la couche, on « éjecte » ces poussières.

La couche mince à fonction optique peut être choisie afin de diminuer la réflexion lumineuse et/ou rendre plus neutre la couleur en réflexion du substrat. Elle présente dans ce cas, de préférence, un indice de réfraction intermédiaire entre celui du revêtement et celui du substrat et une épaisseur optique appropriée, et peut être constituée d'un oxyde ou d'un mélange d'oxydes du type oxyde d'aluminium Al₂O₃, oxyde d'étain SnO₂, oxyde d'indium In₂O₃, oxycarbure ou oxynitrure de silicium. Pour obtenir une atténuation maximale de la couleur en réflexion, il est préférable que cette couche mince présente un indice de réfraction proche de la racine carrée du produit des carrés des indices de réfraction des deux matériaux qui l'encadrent, c'est-à-dire le substrat et le revêtement selon l'invention. Parallèlement, il est avantageux de choisir son épaisseur optique (c'est-à-dire le produit de son épaisseur géométrique et de son indice de réfraction) voisine de lambda/4, lambda étant approximativement la longueur d'onde moyenne dans le visible, notamment d'environ 500 à 550 nm.

La couche mince à fonction de barrière aux alcalins peut être notamment choisie à base d'oxyde, de nitrure, d'oxynitrure ou d'oxycarbure de silicium, en oxyde d'aluminium contenant du fluor Al₂O₃:F, ou encore en nitrure d'aluminium. En fait, elle s'est avérée utile quand le substrat est en verre, car la migration d'ions sodium dans le revêtement selon l'invention peut, dans certaines conditions, en altérer les propriétés photocatalytiques.

La nature du substrat ou de la sous-couche a en outre un intérêt supplémentaire : elle peut favoriser la cristallisation de la couche photocatalytique que l'on dépose, notamment dans le cas du dépôt CVD.

Ainsi, lors de dépôt par CVD de TiO₂, une sous-couche de SnO₂:F cristallisée favorise la croissance de TiO₂ sous forme majoritairement rutile, notamment pour des températures de dépôt de l'ordre de 400° à 500°C, alors que la surface d'un verre sodo-calcique ou d'une sous-couche d'oxycarbure de silicium induit plutôt une croissance anatase, notamment pour des températures de dépôt de l'ordre de 400° à 600°C.

Toutes ces couches minces optionnelles peuvent, de manière connue, être déposées par des techniques sous vide du type pulvérisation cathodique ou par d'autres techniques du type décomposition thermique telles que les pyrolyses en phase solide, liquide ou gazeuse. Chacune des couches prémentionnées peut cumuler plusieurs fonctions, mais on peut aussi les superposer.

L'invention a également pour objet les vitrages « anti-salissures » (salissures organiques et/ou minérales) et/ou « anti-buée », qu'ils soient monolithiques, multiples isolants du type double-vitrage ou feuilletés, et qui incorporent les substrats revêtus précédemment décrits.

L'invention vise donc la fabrication de produits verriers, céramiques ou vitro-céramiques, et tout particulièrement la fabrication de vitrages « auto-nettoyants ». Ceux-ci peuvent avantageusement être des vitrages de bâtiment, comme des double-vitrages (on peut alors disposer le revêtement « côté extérieur » et/ou « côté intérieur », c'est-à-dire en face 1 et/ou en face 4). Cela s'avère tout particulièrement intéressant pour les vitrages peu accessibles au nettoyage et/ou qui ont besoin d'être nettoyés très fréquemment, comme des vitrages de toîture, des vitrages d'aéroports, ... Il peut aussi s'agir de vitrages pour véhicules où le maintien de la visibilité est un critère essentiel de sécurité. Ce revêtement peut ainsi être disposé sur des pare-brise, latéraux ou lunettes arrière de voiture, notamment sur la face des vitrages tournée vers l'intérieur de l'habitacle. Ce revêtement peut alors éviter la formation de buée, et/ou supprimer les traces de salissures du type trace de doigts, nicotine ou matériau organique du type plastifiant volatil relargué par le plastique habillant l'intérieur de l'habitacle, notamment celui du tableau de bord (relargage connu parfois sous le terme anglais de « fogging »). D'autres véhicules tels qu'avions ou trains peuvent aussi trouver intérêt à utiliser des vitrages munis du revêtement de l'invention.

Nombre d'autres applications sont possibles, notamment pour les verres d'aquarium, les vitrines de magasin, les serres, les vérandas, les verres utilisés dans l'ameublement intérieur ou le mobilier urbain, mais aussi les miroirs, les écrans de télévision, le domaine de la lunetterie ou tout matériau d'architecture du type matériau de façade, de bardage, de toiture tel que des tuiles, ...

L'invention permet ainsi de fonctionnaliser ces produits connus, en leur conférant des propriétés anti-ultraviolet, anti-salissure, bactéricide, anti-reflet, anti-statique, anti-microorganisme, ...

Une autre application intéressante du revêtement selon l'invention consiste à l'associer à un vitrage à absorption variable commandée électriquement du type vitrage électrochrome, vitrage à cristaux liquides éventuellement avec colorant dichroïque, vitrage à système de particules suspendues, vitrage viologène... Tous ces vitrages étant constitués en général d'une pluralité de substrats transparents entre lesquels sont disposés les éléments « actifs », on peut alors avantageusement disposer le revêtement sur la face extérieure d'au moins un de ces substrats.

Notamment dans le cas d'un vitrage électrochrome, lorsque ce dernier est à l'état coloré, son absorption conduit à un certain échauffement en surface, ce qui, de fait, est susceptible d'accélérer la décomposition photocatalytique des substances carbonées se déposant sur le revêtement selon l'invention. Pour plus de détails sur la structure d'un vitrage électrochrome, on se reportera avantageusement à la demande de brevet EP-A-0 575 207 décrivant un double vitrage feuilleté électrochrome, le revêtement selon l'invention pouvant, de préférence, être disposé en face 1.

L'invention a également pour objet les différents procédés d'obtention du revêtement selon l'invention. On peut avoir recours à une technique de dépôt du type pyrolyse, intéressante car elle permet notamment le dépôt du revêtement en continu, directement sur le ruban de verre float, lorsqu'on utilise un substrat verrier.

La pyrolyse peut s'effectuer en phase solide, à partir de poudre(s) de précurseur(s) du type organo-métallique(s).

La pyrolyse peut s'effectuer en phase liquide, à partir d'une solution comprenant un précurseur organo-métallique de titane du type chélate de titane et/ou alcoolate de titane. On mélange de tels précurseurs à au moins un autre précurseur organo-métallique. Pour plus de détails sur la nature du précurseur de titane ou sur les conditions de dépôt, on se rapportera par exemple aux brevets FR-2 310 977 et EP-0 465 309.

La pyrolyse peut aussi s'effectuer en phase vapeur, technique que l'on désigne également sous le terme de CVD (Chemical Vapor Deposition), à partir d'au moins un précurseur de titane du type halogénure tel que TiCl₄ ou alcoolate de titane du type tétraisopropylate de Ti, Ti(OiPr)₄. La cristallisation de la couche peut en outre être contrôlée par le type de sous-couche, comme évoqué précédemment.

On peut également déposer le revêtement par d'autres techniques, notamment par les techniques associées au « sol-gel ». Différents modes de dépôt sont possibles, comme le « trempé » aussi appelé « dip-coating » ou un dépôt à l'aide d'une cellule appelé « cell-coating ». Il peut aussi s'agir d'un mode de dépôt par « spray-coating » ou par enduction laminaire, cette dernière technique étant détaillée dans la demande de brevet WO-94/01598. Tous ces modes de dépôt utilisent en général une solution comprenant au moins un précurseur organo-métallique, notamment de titane du type alcoolate que l'on décompose thermiquement après enduction du substrat par la solution sur l'une de ses faces, ou sur ses deux faces.

Il peut être intéressant, par ailleurs, de déposer le revêtement, quelle que soit la technique de dépôt envisagée, non pas en une seule fois, mais par au moins deux étapes successives, ce qui paraît favoriser la cristallisation de l'oxyde de titane sur toute l'épaisseur du revêtement lorsqu'on le choisit relativement épais.

De même, il est avantageux de faire subir au revêtement à propriété photo-catalytique, après dépôt, un traitement thermique du type recuit. Un traitement thermique est indispensable pour une technique du type sol-gel ou enduction laminaire afin de décomposer le (s) précurseur(s) organo-métallique(s) en oxyde, une fois l'enduction du substrat effectuée et améliorer la résistance à l'abrasion, ce qui n'est pas le cas lorsqu'on utilise une technique de pyrolyse où le précurseur se décompose dès qu'il se trouve au contact du substrat. Dans le premier cas comme dans le second, cependant, un traitement thermique post-dépôt, une fois le TiO₂ formé, améliore son taux de cristallisation. La température de traitement choisie peut en outre permettre de mieux contrôler le taux de cristallisation et la nature cristalline, anatase et/ou rutile, de l'oxyde.

Cependant, dans le cas d'un substrat de verre sodo-calcique, des recuissons multiples et prolongées peuvent favoriser une atténuation de l'activité photocatalytique à cause d'une trop grande migration des alcalins du substrat vers la couche photoréactive. L'utilisation d'une couche barrière entre le substrat, s'il est en verre standard, et le revêtement, ou le choix d'un substrat de verre de composition adéquate, ou encore le choix d'un verre sodo-calcique dont la surface est désalcalinisée, permettent de s'affranchir de .. ce risque.

D'autres détails et caractéristiques avantageuses de l'invention ressortent de la description ci-après d'exemples de réalisation non limitatifs, à l'aide des figures suivantes :
- **figure 1 :** une coupe transversale d'un substrat verrier muni du revêtement selon l'invention,
- **figure 2** : un schéma d'une technique de dépôt sol-gel, dite « par trempé » ou par « dip-coating » du revêtement,
- **figure 3** : un schéma d'une technique de dépôt dite « cell-coating »,
- **figure 4 :** un schéma d'une technique de dépôt dite « spray-coating »,
- **figure 5 :** un schéma d'une technique de dépôt par enduction laminaire.

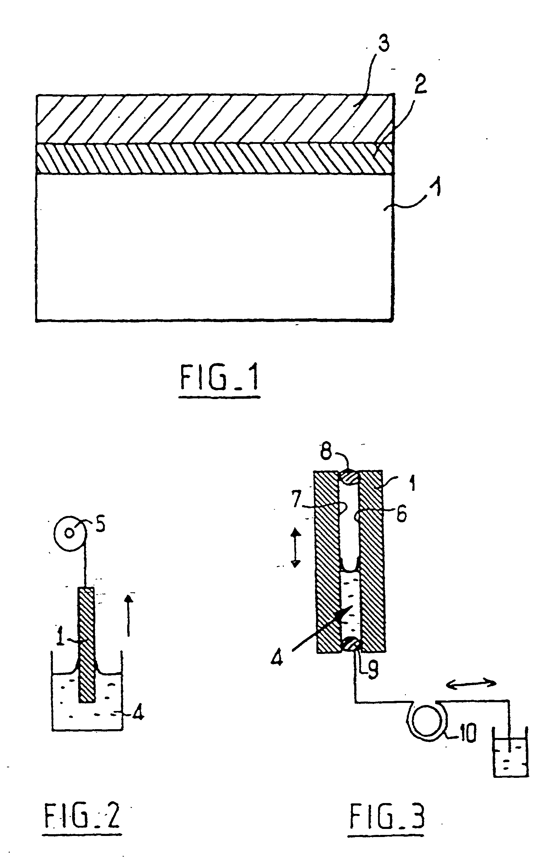

Comme représenté de manière extrêmement schématique en figure 1, tous les exemples suivants concernent le dépôt d'un revêtement 3 dit « anti-salissures » essentiellement à base d'oxyde de titane sur un substrat transparent 1.

Le substrat 1 est en verre clair silico-sodo-calcique de 4 mm d'épaisseur et 50 cm de long et de large. Il va de soi que l'invention n'est pas limitée à ce type spécifique de verre. Le verre peut en outre ne pas être plan, mais bombé.

Entre le revêtement 3 et substrat 1, se trouve une couche mince optionnelle 2 soit à base d'oxycarbure de silicium noté SiOC en vue de constituer une barrière à la diffusion aux alcalins et/ou une couche atténuant la réflexion lumineuse, soit à base d'oxyde d'étain dopé au fluor SnO₂:F en vue de constituer une couche anti-statique et/ou bas-émissive, même à effet bas-émissif peu accentué, et/ou atténuant la couleur notamment en réflexion.

### EXEMPLES 1 A 3

Les exemples 1 à 3 concernent un revêtement 3 déposé à l'aide d'une technique de pyrolyse en phase liquide. On peut procéder en continu, en utilisant une buse de distribution adaptée disposée transversalement et au-dessus du ruban de verre float, au sortir de l'enceinte du bain float proprement dit. Ici, on a procédé de façon discontinue, en utilisant une buse mobile disposée face au substrat 1 déjà découpé aux dimensions indiquées, substrat qui est d'abord chauffé dans un four à une température de 400 à 650°C avant de défiler à vitesse constante devant la buse projetant une solution appropriée.

### EXEMPLE 1

Dans cet exemple, il n'y a pas de couche optionnelle 2. Le revêtement 3 est déposé à l'aide d'une solution comprenant deux précurseurs organo-métalliques de titane, le di-iso-propoxy di-acétylacétonate de titane et le tétra-octylène glycolate de titane dissous dans un mélange de deux solvants, qui sont de l'acétate d'éthyle et de l'isopropanol.

On peut noter que d'autres précurseurs de même type sont tout-à-fait utilisables également, notamment d'autres chélates de titane du type acétylacétonate de titane, méthylacétoacétate de titane, éthylacétoacétate de titane ou encore le titane tri-éthanol amine ou le titane di-éthanol amine.

Dès que le substrat 1 a atteint la température voulue dans le four, soit notamment environ 500°C, celui-ci défile devant la buse projetant à température ambiante le mélange indiqué à l'aide d'air comprimé.

On obtient alors une couche de TiO₂ d'environ 90 nm d'épaisseur, l'épaisseur pouvant être contrôlée par la vitesse de défilement du substrat 1 devant la buse et/ou la température dudit substrat. La couche est partiellement cristallisée sous forme anatase.

Cette couche présente une excellente tenue mécanique. Sa résistance aux tests d'abrasion est comparable à celle obtenue pour la surface du verre nu.

Elle est bombable et trempable. Elle ne présente pas de voile : la transmission lumineuse diffuse du substrat revêtu est inférieure à 0.6% (mesurée selon l'illuminant D₆₅ à 560 nm).

### EXEMPLE 2

Il renouvelle l'exemple 1, mais en intercalant entre le substrat 1 et revêtement 3 une couche 2 en SnO₂:F de 73 nm d'épaisseur. Cette couche est obtenue par pyrolyse de poudre à partir de difluorure de dibutylétain DBTF. On peut aussi l'obtenir, de manière connue, par pyrolyse en phase liquide ou vapeur, comme cela est par exemple décrit dans la demande de brevet EP-A-0 648 196. En phase vapeur, on peut notamment utiliser un mélange de mono-butyl trichlorure d'étain et d'un précurseur fluoré associé éventuellement à un oxydant « doux » du type H₂O.

L'indice de la couche obtenue est d'environ 1,9. Sa résistance carrée est d'environ 50 ohms.

Dans l'exemple 1 précédent, le substrat 1 revêtu, monté en double-vitrage de manière à ce que le revêtement soit en face 1 (avec un autre substrat 1' non revêtu mais de même nature et dimensions que le substrat 1 par l'intermédiaire d'une lame d'air de 12 mm) présente une valeur de pureté de couleur en réflexion de 26% et une valeur de pureté de couleur en transmission de 6,8%.

Dans cet exemple 2, la pureté de couleur en réflexion (dans les dorés) n'est plus que de 3,6%, et elle est de 1,1 % en transmission.

Ainsi, la sous-couche en SnO₂:F permet de conférer au substrat des propriétés anti-statiques dues à sa conductivité électrique, elle a également une influence favorable sur la colorimétrie du substrat, en rendant nettement plus « neutre » sa coloration, aussi bien en transmission qu'en réflexion, coloration provoquée par la présence du revêtement 3 d'oxyde de titane présentant un indice de réfraction relativement élevé. On peut la polariser en la munissant d'une alimentation électrique adaptée, pour limiter le dépôt de poussières de taille relativement importante de l'ordre du millimètre.

En outre, cette sous-couche diminue la diffusion des alcalins dans la couche photocatalytique de TiO₂. L'activité photocatalytique est donc améliorée.

### EXEMPLE 3

Il renouvelle l'exemple 2, mais en intercalant cette fois entre substrat 1 et revêtement 3 une couche 2 à base d'oxycarbure de silicium, d'indice d'environ 1,75 et d'épaisseur environ 50 nm, couche que l'on peut obtenir par CVD à partir d'un mélange de SiH₄ et d'éthylène en dilution dans de l'azote, comme décrit dans la demande de brevet EP-A-0 518 755. Cette couche est particulièrement efficace pour empêcher la tendance à la diffusion d'alcalins (Na⁺, K⁺) et d'alcalino-terreux (Ca⁺⁺) provenant du substrat 1 vers le revêtement 3 et donc l'activité photocatalytique est nettement améliorée. Ayant, comme SnO₂:F, un indice de réfraction intermédiaire entre celui du substrat (1,52) et du revêtement 3 (environ 2,30 à 2,35.), elle permet également d'atténuer l'intensité de la coloration du substrat aussi bien en réflexion qu'en transmission et de diminuer globalement la valeur de réflexion lumineuse R_{L} dudit substrat.

Les exemples 4 à 7 suivants concernent des dépôts par CVD.

### EXEMPLE 4 A 7

### EXEMPLE 4

Cet exemple concerne le dépôt par CVD du revêtement 3 directement sur le substrat 1, à l'aide d'une buse standard comme celle représentée dans la demande de brevet EP-A-0 518 755 précitée. Comme précurseurs, on utilise soit un organo-métallique, soit un halogénure métallique. Ici on choisit comme organo-métallique le tétra-isopropylate de titane, intéressant pour sa grande volatilité et sa grande plage de températures d'utilisation, de 300 à 650°C. Le dépôt s'effectue dans cet exemple à environ 425°C, l'épaisseur de TiO₂ est de 15 nm.

Le tétra-éthoxy titane Ti(O-Et)₄ peut aussi convenir, et comme halogénure, on peut citer TiCl₄.

### EXEMPLE 5

Il s'effectue similairement à l'exemple 4, sauf qu'ici on dépose la couche de 15 nm de TiO₂ non pas directement sur le verre, mais sur une sous-couche en SiOC de 50 nm déposée comme dans l'exemple 3.

### EXEMPLE 6

Il s'effectue comme l'exemple 4, sauf qu'ici l'épaisseur de la couche de TiO₂ est de 65 nm.

### EXEMPLE 7

Il s'effectue comme à l'exemple 5, sauf qu'ici l'épaisseur de la couche de TiO₂ est de 60 nm.

De ces exemples 4 à 7, on constate que les substrats ainsi revêtus présentent une bonne tenue mécanique aux tests d'abrasion. En particulier, on n'observe pas de délamination de la couche de TiO₂.

### EXEMPLE 8

Cet exemple utilise une technique associée au sol-gel utilisant un mode de dépôt par « trempé » encore appelé « dip-coating » dont le principe ressort de la figure 2: il s'agit d'immerger le substrat 1 dans la solution liquide 4 contenant le(s) précurseur(s) adéquat(s) du revêtement 3, puis d'en extraire le substrat 1 à vitesse contrôlée à l'aide d'un moyen moteur 5, le choix de la vitesse d'extraction permettant d'ajuster l'épaisseur de solution restant à la surface des deux faces du substrat et, de fait, l'épaisseur des revêtements déposés, après traitement thermique de ce dernier pour à la fois évaporer le solvant et décomposer le ou les précurseurs en oxyde.

On utilise pour déposer le revêtement 3 une solution 4 comprenant soit du tétrabutoxyde de titane Ti(O-Bu)₄ stabilisé avec de la diéthanol amine DEA en proportion molaire 1:1 dans un solvant type éthanol à 0,2 mole de tétrabutoxyde par litre d'éthanol, soit le mélange de précurseurs et de solvants décrits dans l'exemple 1. ( Peut aussi être utilisé un autre précurseur comme le dibutoxy-diéthanolamine de titane).

Les substrats 1 peuvent comporter des sous-couches SiOC.

Après extraction de chacune des solutions 4, les substrats 1 sont chauffés 1 heure à 100°C puis environ 3 heures à 550°C avec une montée en température progressive.

On obtient sur chacune des faces un revêtement 3, dans les deux cas en TiO₂ bien cristallisé sous forme anatase.

### EXEMPLE 9

Cet exemple utilise la technique appelée « cell-coating » dont le principe est rappelé dans la figure 3. Il s'agit de former une cavité étroite délimitée par deux faces sensiblement parallèles 6, 7 et deux joints 8, 9, au moins une de ces faces 6, 7 étant constituée par la face du substrat 1 à traiter. Puis on remplit la cavité de la solution 4 de précurseur(s) du revêtement, et on retire la solution 4 de manière contrôlée, de manière à forme un ménisque de mouillage à l'aide d'une pompe 10 péristaltique par exemple, en laissant un film de la solution 4 sur le face du substrat 1 au fur et à mesure du retrait de la solution.

La cavité 5 est ensuite maintenue au moins le temps nécessairé à un séchage. Le durcissement du film est effectué par traitement thermique. L'avantage de cette technique par rapport au « dip-coating » est notamment que l'on peut traiter qu'une seule des deux faces du substrat 1, et non les deux systématiquement, à moins d'avoir recours à un système de masquage.

Les substrats 1 comportent des couches minces 2 à base d'oxycarbure de silicium SiOC.

L'exemple 6 utilise respectivement les solutions 4 décrites dans l'exemple 8. Les mêmes traitements thermiques sont ensuite opérés pour obtenir le revêtement 3 de TiO₂.

Le revêtement 3 présente-une bonne durabilité mécanique.

Il apparaît au MEB (microscope électronique à balayage) un effet de champ sous la forme de « grains » de monocristaux de diamètre environ 30 nm. La rugosité de ce revêtement induit des propriétés de mouillage exaltées par rapport à un revêtement non rugueux.

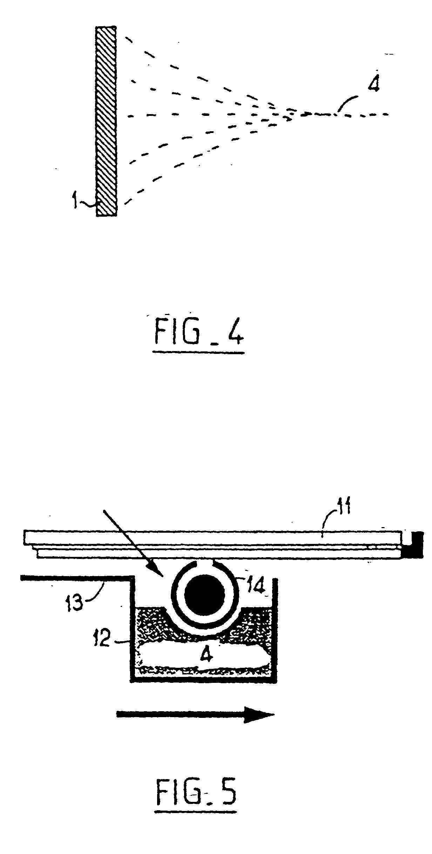

Ces mêmes solutions 4 peuvent être également utilisées pour déposer des revêtements par « spray-coating », comme représenté en figure 4, où l'on pulvérise la solution 4 sous forme d'un nuage contre le substrat 1 en statique, ou par enduction laminaire comme représenté en figure 5. Dans ce dernier cas, on fait passer le substrat 1, maintenu par succion sous vide, contre un support 11 en inox et Téflon au-dessus d'un réservoir 12 contenant la solution, solution dans laquelle est partiellement immergé un cylindre 14 fendu, on déplace ensuite l'ensemble du réservoir 12 et du cylindre 14 sur toute la longueur du substrat 1, le masque 13 évitant une évaporation trop rapide du solvant de la solution 4. Pour plus de détails sur cette dernière technique, on se reportera avantageusement à la demande de brevet WO-94/01598 précuitée.

Des tests ont été effectués sur les substrats obtenus selon les exemples précédents afin de caractériser les revêtements déposés et évaluer leurs performances « anti-buée » et « anti-salissures ».
□ **Test 1 :** c'est le test des figures de buée. Il consiste à observer les conséquences de la photo-catalyse et de la structure du revêtement (taux de groupes hydroxyl, porosité, rugosité) sur le mouillage. Si la surface est photo-réactive, les micro-pollutions carbonées qui se déposent sur le revêtement sont détruites en permanence, et la surface est hydrophile donc anti-buée. On peut aussi faire une évaluation quantitative en réchauffant brusquement le substrat revêtu initialement, entreposé au froid ou simplement en soufflant sur le substrat, en mesurant s'il apparaît de la buée et dans l'affirmative, à quel moment, puis en mesurant le temps nécessaire à la disparition de ladite buée.
□ **Test 2** : il s'agit d'évaluer l'hydrophilie et l'oléophilie à la surface du revêtement 3, en comparaison de celles de la surface d'un verre nu, par la mesure d'angles de contact d'une goutte d'eau et d'une goutte de DOP (di-octyl-phtalate) à leurs surfaces, après avoir laissé les substrats une semaine à l'atmosphère ambiante sous éclairage naturel, dans le noir puis les avoir soumis 20 minutes à un rayonnement UVA.
□ **Test 3** : il consiste à déposer sur le substrat à évaluer une couche d'un organosilane et à l'irradier par des U.V.A. de manière à la dégrader par photocatalyse. L'organosilane modifiant les propriétés de mouillage, les mesures d'angle de contact à l'eau du substrat au cours de l'irradiation indiquent l'état de dégradation de la couche greffée. La vitesse de disparition - de cette couche est reliée à l'activité photocatalytiqué du substrat.

L'organosilane greffé est un trichlorosilane : l'octadécyltrichlorosilane (OTS). Le greffage est réalisé par trempé.

L'appareil de test est constitué d'un carrousel tournant autour de 1 à 6 lampes U.V.A. basse pression. Les éprouvettes à évaluer sont placées dans le carrousel, la face à évaluer du côté du rayonnement U.V.A. Selon leur position et le nombre de lampes allumées, chaque éprouvette reçoit une irradiation . U.V.A. variant de 0,5 W/m² à 50 W/m². Pour les exemples 1, 2, 3, 8 et 9, la puissance d'irradiation est choisie de 1,8 W/m², et pour les exemples 4 à 7 de 0,6 W/m².

Le temps entre chaque mesure de l'angle de contact varie entre 20 min et 3 h, selon l'activité photocatalytique de l'éprouvette considérée. Les mesures sont effectuées à l'aide d'un goniomètre.

Avant irradiation, les verres présentent un angle d'environ 100°. On considère que la couche est détruite après irradiation lorsque l'angle est inférieur à 20°.

Chaque éprouvette testée est caractérisée par la vitesse moyenne de disparition de la couche, donnée en nanomètre par heure, c'est-à-dire l'épaisseur de la couche d'organosilane déposée divisée, par la durée d'irradiation permettant d'atteindre un palier final inférieur à 20° (temps de disparition de la couche d'organosilane).

Tous les exemples précédents réussissent le test 1, c'est-à-dire que lorsqu'on souffle sur les substrats revêtus du revêtement, ils restent parfaitement transparents, alors que se depose une couche de buée bien visible sur des substrats non revêtus.

Les exemples ont subi le test 2 : les substrats revêtus, après exposition aux rayonnements UVA, présentent un angle de contact à l'eau et au DOP d'au plus 5°. Au contraire, un verre nu dans les mêmes conditions présente un angle de contact à l'eau de 40° et un angle de contact au DOP de 20°.

Le tableau ci-dessous regroupe les résultats des substrats revêtus selon les exemples précédents au test 3.

| **Substrat** | **Test 3 de mouillage à 1,8 W/m**^{**2**} **U.V.A. (en nm/h)** |
|---|---|
| Exemple 1 (TiO₂ sur verre nu) | 0,03 |
| Exemple 2 (TiO₂ sur SnO₂:F) | 0,1 |
| Exemple 3 (TiO₂ sur SiOC) | 0,2 |
| Exemple 8 (TiO₂ sur 50 nm SiOC) | 5 |
| Exemple 9 (TiO₂ sur 50 nm SiOC) | 5 |
| Verre nu | 0 |

| **Substrat (CVD)** | **Test 3 de mouillage à 0,6 W/m**^{**2**} **U.V.A. (en nm/h)** |
|---|---|
| Exemple 4 (TiO₂ sur verre nu) | < 0,05 nm/h |
| Exemple 5 (TiO₂ sur SiOC) | 4 |
| Exemple 6 (TiO₂ sur verre nu) | 9 |
| Exemple 7 (TiO₂ sur SiOC) | 19,5 |

Du tableau, on peut constater que la présence de sous-couches, notamment en SiOC, favorise l'activité photocatalytique du revêtement contenant le TiO₂, par son effet de barrière aux alcalins et alcalino-terreux pouvant migrer du verre (comparaison des exemples 4 et 5 ou 6 et 7).

On observe aussi que l'épaisseur du revêtement contenant le TiO₂ joue également un rôle (comparaison des exemples 1 et 3) : pour une épaisseur de revêtement en TiO₂ supérieure à la taille moyenne des mono-cristaux ou « cristallites », on obtient un meilleur effet photocatalytique.

En fait, on a pu observer que ce sont les revêtements en TiO₂ obtenus par CVD qui présentent la cristallisation la plus poussée, avec des tailles de cristallites de l'ordre de 20 à 30 nm. On peut constater que l'activité photocatalytique de l'exemple 6 (65 nm de TiO₂) est nettement supérieure à celle de l'exemple 4 (15 nm de TiO₂ seulement). Il est donc avantageux de prévoir une épaisseur de revêtement de TiO₂ au moins deux fois supérieure au diamètre moyen des cristallites qu'il contient. Alternativement, comme c'est le cas de l'exemple 5, on peut conserver une épaisseur mince de revêtement en TiO₂ mais alors choisir d'utiliser une sous-couche de nature et d'épaisseur appropriées pour favoriser au mieux la croissance cristalline de TiO₂ dès la « première » couche de cristallites.

On a pu observer que la cristallisation du TiO₂ était un peu moins poussée pour les revêtements déposés par une autre technique que la CVD. Là encore, tout est cependant affaire de compromis : une cristallisation moins poussée et une activité photocatalytique a priori moins élevée peuvent être « compensées » par l'utilisation d'un procédé de dépôt moins onéreux ou moins complexe, par exemple. De plus, l'utilisation d'une sous-couche appropriée ou le dopage du TiO₂ peuvent permettre d'améliorer les performances photocatalytiques si nécessaire.

On vérifie aussi de la comparaison des exemples 2 et 3 que la nature de la sous-couche influe sur le mode de cristallisation et, de fait, sur l'activité photocatalytique du revêtement.

## Revendications

1. Substrat (1) à base verrière, céramique ou vitrocéramique, muni sur au moins une partie d'au moins une de ses faces d'un revêtement (3) à propriété photocatalytique comportant de l'oxyde de titane au moins partiellement cristallisé in situ lors de la formation du revêtement sur le substrat **caractérisé en ce que** le dit revêtement (3) constitue la dernière couche d'un empilement de couches antireflets.

2. Substrat (1) selon la revendication 1, **caractérisé en ce que** l'oxyde de titane est cristallisé sous forme de cristallites de taille moyenne comprise entre 0,5 et 60 nm.

3. Substrat (1) selon la revendication 1, **caractérisé en ce que** le revêtement comporte également un matériau minéral, notamment sous forme d'un oxyde ou mélange d'oxydes amorphe ou partiellement cristallisé.

4. Substrat (1) selon la revendication 3, **caractérisé en ce que** l'oxyde ou le mélange d'oxydes est choisi parmi au moins l'un des oxydes suivants : oxyde de silicium, oxyde de titane, oxyde d'étain, oxyde de zirconium, oxyde d'aluminium.

5. Substrat (1) selon la revendication 1, **caractérisé en ce que** la surface du revêtement (3) est hydrophile, avec notamment un angle de contact à l'eau inférieur à 5° après exposition à un rayonnement lumineux.

6. Substrat (1) selon la revendication 1, **caractérisé en ce que** ledit revêtement (3) présente une rugosité RMS comprise entre 2 et 20 nm, notamment entre 5 et 20 nm.

7. Substrat (1) selon la revendication 1, **caractérisé en ce qu'**est disposée sous le revêtement (3) à propriété photocatalytique au moins une couche mince à base de matériau conducteur du type métal ou oxyde métallique dopé tel que ITO, SnO₂ :F, ZnO :In, ZnO :F, ZnO :Al, ZnO :Sn ou oxyde métallique sous-stoechiométrique en oxygène comme SnO₂₋ₓ ou ZnO₂₋ₓ avec x < 2.

8. Substrat (1) selon l'une des revendications précédentes, **caractérisé en ce que** l'oxyde de titane cristallisé est sous forme anatase, sous forme rutile ou sous forme d'un mélange d'anatase et de rutile.

9. Substrat (1) selon l'une des revendications précédentes, **caractérisé en ce que** l'oxyde de titane est cristallisé avec un taux de cristallisation d'au moins 25%, notamment compris entre 30 et 80%.

10. Substrat (1) selon l'une des revendications précédentes, **caractérisé en ce que** l'oxyde de titane cristallisé est sous forme de cristallites de taille moyenne comprise entre 1 et 50 nm, notamment 10 à 40 nm.

11. Substrat (1) selon l'une des revendications précédentes, **caractérisé en ce que** le revêtement comprend des additifs aptes à amplifier le phénomène photocatalytique dû à l'oxyde de titane, notamment en augmentant la bande d'absorption du revêtement et/ou en augmentant le nombre de porteurs de charges par dopage du réseau cristallin de l'oxyde ou par dopage de surface du revêtement et/ou en augmentant rendement et cinétique des réactions photocatalytiques en recouvrant au moins une partie du revêtement par un catalyseur.

12. Substrat (1) selon la revendication 11, **caractérisé en ce que** le réseau cristallin de l'oxyde de titane est dopé, notamment par au moins un des éléments métalliques du groupe comprenant le niobium, le tantale, le fer, le bismuth, le cobalt, le nickel, le cuivre, le ruthénium, le cérium, le molybdène.

13. Substrat (1) selon la revendication 11, **caractérisé en ce que** l'oxyde de titane ou le revêtement (3) dans son ensemble est revêtu d'un catalyseur, notamment sous la forme de couche mince de métal noble du type platine, rhodium, argent, palladium.

14. Substrat (1) selon la revendication 11, **caractérisé en ce que** le revêtement incorpore des éléments métalliques, notamment sous forme de particules, visant à augmenter sa bande d'absorption, éléments choisis parmi l'étain, le cadmium, le tungstène, le cérium ou le zirconium.

15. Substrat (1) selon la revendication 11, ***caractérisé en ce que*** le dopage de surface de l'oxyde de titane ou du revêtement qui le comporte est réalisé en recouvrant au moins une partie dudit revêtement d'une couche d'oxyde ou de sels métalliques, le métal étant choisi parmi le fer, le cuivre, le ruthénium, le cérium, le molybdène, le bismuth, le vanadium.

16. Substrat (1) selon l'une des revendications 1, 2, 5, 6 ou 7, ***caractérisé en ce que*** la surface du revêtement (3) est oléophile.

17. Substrat (1) selon l'une des revendications précédentes, ***caractérisé en ce que*** l'épaisseur du revêtement (3) est compris entre 5 nm et 1 micron, notamment entre 5 et 100 nm, de préférence 10 à 80, notamment 20 à 50 nanomètres.

18. Substrat (1) selon l'une des revendications précédentes, ***caractérisé en ce qu'***est disposée sous le revêtement (3) à propriété photocatalytique au moins une couche mince (2) à fonction anti-statique, éventuellement à polarisation contrôlée, thermique, optique, ou faisant barrière à la migration des alcalins provenant du substrat (1).

19. Substrat (1) selon la revendication 18, ***caractérisé en ce que*** la couche mince (2) à fonction optique est à base d'un oxyde ou d'un mélange d'oxydes dont l'indice de réfraction est intermédiaire entre celui du revêtement et celui du substrat, notamment choisi(s) parmi les oxydes suivants : Al₂O₃, SnO₂, In₂O₃, oxycarbure ou oxynitrure de silicium.

20. Substrat (1) selon la revendication 18, ***caractérisé en ce que*** la couche mince (2) à fonction de barrière aux alcalins est à base d'oxyde, de nitrure, d'oxynitrure ou d'oxycarbure de silicium, d'Al₂O₃:F ou de nitrure d'aluminium.

21. Vitrage « anti-salissures et/ou anti-buée », monolithique, multiple du type double-vitrage ou feuilleté incorporant le substrat (1) selon l'une des revendications précédentes.

22. Application du substrat (1) selon l'une des revendications 1 à 20 à la fabrication de vitrages « auto-nettoyants », anti-buée et/ou anti-salissures, du type salissures organiques et/ou minérales, notamment des vitrages pour le bâtiment du type double-vitrage, des vitrages pour véhicules du type pare-brise, lunette arrière ou latéraux d'automobile, trains, avions, ou vitrages utilitaires comme des verres d'aquarium, de vitrines, de serre, d'ameublement intérieur, de mobilier urbain, ou des miroirs, écrans de télévision, vitrages à absorption variable commandée électriquement.

23. Procédé d'obtention du substrat (1) selon l'une des revendications 1 à 20, ***caractérisé en ce qu'****on* dépose le revêtement (1) à propriété photocatalytique par pyrolyse en phase liquide, notamment à partir d'une solution comprenant au moins un précurseur organo-métallique de titane du type chélate de titane et/ou alcoolate de titane.

24. Procédé d'obtention du substrat (1) selon l'une des revendications 1 à 20, ***caractérisé en ce qu'****on* dépose le revêtement (3) à propriété photocatalytique par une technique de sol-gel, avec un mode de dépôt du type trempé ou dip-coating, cell-coating, spray-coating, ou enduction laminaire, à partir d'une solution comprenant au moins un précurseur organo-métallique de titane du type alcoolate de titane.

25. Procédé d'obtention du substrat (1) selon l'une des revendications 1 à **20, *caractérisé en ce qu'****on* dépose le revêtement (3 à propriété photocatalytique par pyrolyse en phase vapeur, CVD, à partir d'au moins un précurseur de titane du type halogénure ou organo-métallique.

26. Procédé d'obtention du substrat (1) selon l'une des revendications 1 à 21, ***caractérisé en ce qu'****on* dépose le revêtement (3 à propriété photocatalytique par une technique sous vide telle qu'une pulvérisation cathodique réactive ou non.

27. Procédé selon l'une des revendications 23 à 26, ***caractérisé en ce qu'****on* dépose le revêtement (3) à propriété photocatalytique en au moins deux étapes successives.

28. Procédé selon l'une des revendications 23 à 27, ***caractérisé en ce qu'****on* fait subir au revêtement (3) à propriété photocatalytique près dépôt au moins un traitement thermique du type recuit.

## Patentansprüche

1. Substrat (1) auf der Basis von Glas, Keramik oder Glaskeramik, das auf wenigstens einem Teil mindestens einer Seite mit einer Beschichtung (3) mit photokatalytischen Eigenschaften versehen ist, die Titanoxid umfasst, das in situ bei der Bildung der Beschichtung auf dem Substrat wenigstens teilweise kristallisiert ist, **dadurch gekennzeichnet, dass** die Beschichtung (3) die letzte Schicht eines Antireflex-Schichtaufbaus bildet.

2. Substrat (1) nach Anspruch 1, **dadurch gekennzeichnet, dass** das Titanoxid in Form von Kristalliten mit einer mittleren Größe von 0,5 bis 60 nm auskristallisiert ist.

3. Substrat (1) nach Anspruch 1, **dadurch gekennzeichnet, dass** die Beschichtung auch ein anorganisches Material umfasst, insbesondere in Form eines Oxids oder Oxidgemischs, das amorph oder teilweise kristallisiert ist.

4. Substrat (1) nach Anspruch 3, **dadurch gekennzeichnet, dass** das Oxid oder Oxidgemisch aus mindestens einem der folgenden Oxide ausgewählt ist: Siliciumoxid, Titanoxid, Zinnoxid, Zirconiumoxid und Aluminiumoxid.

5. Substrat (1) nach Anspruch 1, **dadurch gekennzeichnet, dass** die Oberfläche der Beschichtung (3) hydrophil mit insbesondere einem Kontaktwinkel mit Wasser von unter 5° nach Bestrahlung mit Licht ist.

6. Substrat (1) nach Anspruch 1, **dadurch gekennzeichnet, dass** die Beschichtung (3) eine Rauhtiefe RMS von 2 bis 20 nm und insbesondere zwischen 5 und 20 nm aufweist.

7. Substrat (1) nach Anspruch 1, **dadurch gekennzeichnet, dass** unter der Beschichtung (3) mit photokatalytischen Eigenschaften mindestens eine dünne Schicht auf der Basis eines leitfähigen Materials vom Typ Metall oder dotiertes Metalloxid wie ITO, SnO₂:F, ZnO:In, ZnO:F, ZnO:Al, ZnO:Sn oder an Sauerstoff unterstöchiometrisches Metalloxid wie SnO₂₋ₓ bzw. ZnO₂₋ₓ, mit x < 2, angeordnet ist.

8. Substrat (1) nach einem der vorhergehenden Ansprüche, **dadurch gekennzeichnet, dass** das Titanoxid in Form von Anatas, Rutil oder eines Anatas-Rutil-Gemischs auskristallisiert ist.

9. Substrat (1) nach einem der vorhergehenden Ansprüche, **dadurch gekennzeichnet, dass** das Titanoxid mit einem Kristallisationsgrad von mindestens 25 % und insbesondere von 30 bis 80 % auskristallisiert ist.

10. Substrat (1) nach einem der vorhergehenden Ansprüche, **dadurch gekennzeichnet, dass** das Titanoxid in Form von Kristalliten mit einer mittleren Größe von 1 bis 50 nm und insbesondere 10 bis 40 nm auskristallisiert ist.

11. Substrat (1) nach einem der vorhergehenden Ansprüche, **dadurch gekennzeichnet, dass** die Beschichtung Additive umfasst, die in der Lage sind, das vom Titanoxid verursachte photokatalytische Phänomen zu verstärken, insbesondere, indem sie die Absorptionsbande der Beschichtung und/oder die Anzahl der Ladungsträger durch Dotieren des Oxidkristallgitters bzw. der Oberfläche der Beschichtung vergrößern und/oder Ausbeute und Kinetik der photokatalytischen Reaktionen erhöhen, indem sie wenigstens einen Teil der Beschichtung mit einem Katalysator bedecken.

12. Substrat 1 nach Anspruch 11, **dadurch gekennzeichnet, dass** das Titanoxidkristallgitter dotiert ist, insbesondere mit mindestens einem der Metallelemente der Gruppe, die Niob, Tantal, Eisen, Wismut, Cobalt, Nickel, Kupfer, Ruthenium, Cer und Molybdän umfasst.

13. Substrat (1) nach Anspruch 11, **dadurch gekennzeichnet, dass** das Titanoxid oder die Beschichtung (3) in ihrer Gesamtheit mit einem Katalysator bedeckt ist, insbesondere in Form einer dünnen Schicht aus einem Edelmetall vom Typ Platin, Rhodium, Silber und Palladium.

14. Substrat (1) nach Anspruch 11, **dadurch gekennzeichnet, dass** die Beschichtung insbesondere in Form von Teilchen vorliegende Metallelemente enthält, die dafür vorgesehen sind, ihre Absorptionsbande zu vergrößern und aus Zinn, Cadmium, Wolfram, Cer oder Zirconium ausgewählt sind.

15. Substrat (1) nach Anspruch 11, **dadurch gekennzeichnet, dass** das Dotieren der Oberfläche des Titanoxids oder der Beschichtung, die dieses enthält, durchgeführt wird, indem wenigstens ein Teil der Beschichtung mit einer Schicht aus einem Metalloxid oder aus Metallsalzen bedeckt wird, wobei das Metall aus Eisen, Kupfer, Ruthenium, Cer, Molybdän, Wismut und Vanadium ausgewählt wird.

16. Substrat (1) nach einem der Ansprüche 1, 2, 5, 6 oder 7, **dadurch gekennzeichnet, dass** die Oberfläche der Beschichtung (3) oleophil ist.

17. Substrat (1) nach einem der vorhergehenden Ansprüche, **dadurch gekennzeichnet, dass** die Dicke der Beschichtung (3) 5 nm bis 1 Mikrometer, insbesondere zwischen 5 und 100 nm, vorzugsweise 10 bis 80 nm, und speziell 20 bis 50 nm beträgt.

18. Substrat (1) nach einem der vorhergehenden Ansprüche, **dadurch gekennzeichnet, dass** unter der Beschichtung (3) mit photokatalytischen Eigenschaften mindestens eine dünne Schicht (2) mit, gegebenenfalls mit kontrollierter Polarisation, antistatischer thermischer und optischer Funktion oder welche eine Barriere gegen die Migration von vom Substrat (1) kommenden Alkaliionen bildet, angeordnet ist.

19. Substrat (1) nach Anspruch 18, **dadurch gekennzeichnet, dass** die dünne Schicht (2) mit optischer Funktion auf der Basis eines Oxids oder Oxidgemischs ist, dessen Brechungsindex zwischen demjenigen der Beschichtung und demjenigen des Substrats liegt, und welche/s insbesondere aus folgenden Oxiden: Al₂O₃, SnO₂, In₂O₃, Siliciumcarbidoxid oder Siliciumnitridoxid ausgewählt ist/sind.

20. Substrat (1) nach Anspruch 18, **dadurch gekennzeichnet, dass** die dünne Schicht (2) mit Barrierefunktion gegen Alkaliionen auf der Basis von Siliciumoxid, -nitrid, -nitridoxid bzw. -carbidoxid, Al₂O₃:F oder Aluminiumnitrid ist.

21. Schmutz und/oder Beschlag abweisende monolithische Verglasung, Mehrfachverglasung vom Typ Doppelverglasung oder Verbundverglasung, die das Substrat (1) nach einem der vorhergehenden Ansprüche umfasst.

22. Verwendung des Substrats (1) nach einem der Ansprüche 1 bis 20 zur Herstellung von Beschlag und/oder Schmutz vom Typ organische und/oder anorganische Verschmutzungen abweisenden "selbstreinigenden" Verglasungen, insbesondere Verglasungen für Gebäude vom Typ Doppelverglasung, Verglasungen für Fahrzeuge vom Typ Front-, Heck- bzw. Seitenscheibe, für Eisenbahnzüge und Flugzeuge, Gebrauchsverglasungen wie Gläser für Aquarien, Schaufenster, Gewächshäuser, Inneneinrichtungen und Stadtmöblierungen oder Spiegeln, Bildschirmen und Verglasungen mit elektrisch gesteuerter veränderbarer Lichtabsorption.

23. Verfahren zur Herstellung des Substrats (1) nach einem der Ansprüche 1 bis 20, **dadurch gekennzeichnet, dass** die Beschichtung (3) mit photokatalytischen Eigenschaften durch Pyrolyse aus der Flüssigphase, insbesondere aus einer Lösung, die mindestens einen metallorganischen Vorläufer des Titans vom Typ Titanchelat und/oder Titanalkoholat enthält, aufgebracht wird.

24. Verfahren zur Herstellung des Substrats ( 1 ) nach einem der Ansprüche 1 bis 20, **dadurch gekennzeichnet, dass** die Beschichtung (3) mit photokatalytischen Eigenschaften durch ein Sol-Gel-Verfahren durch Tauchbeschichten oder Dip-Coating, Zellbeschichten, Sprühbeschichten oder Walzauftrag aus einer Lösung, die mindestens einen metallorganischen Vorläufer des Titans vom Typ Titanalkoholat enthält, aufgebracht wird.

25. Verfahren zur Herstellung des Substrats (1) nach einem der Ansprüche 1 bis 20, **dadurch gekennzeichnet, dass** die Beschichtung (3) mit photokatalytischen Eigenschaften durch Gasphasenabscheidung, CVD, aus mindestens einem Titanvorläufer vom Typ Halogenid oder metallorganische Verbindung aufgebracht wird.

26. Verfahren zur Herstellung des Substrats (1) nach einem der Ansprüche 1 bis 21, **dadurch gekennzeichnet, dass** die Beschichtung (3) mit photokatalytischen Eigenschaften durch ein Vakuumverfahren wie eine gegebenenfalls reaktive Kathodenzerstäubung aufgebracht wird.

27. Verfahren nach einem der Ansprüche 23 bis 26, **dadurch gekennzeichnet, dass** die Beschichtung (3) mit photokatalytischen Eigenschaften in mindestens zwei aufeinander folgenden Stufen aufgebracht wird.

28. Verfahren nach einem der Ansprüche 23 bis 27, **dadurch gekennzeichnet, dass** die Beschichtung (3) mit photokatalytischen Eigenschaften nach dem Aufbringen mindestens einer Wärmebehandlung vom Typ Abkühlen im Kühlofen unterworfen wird.

## Claims

1. Substrate (1) based on glass, ceramic or glass-ceramic, provided on at least part of at least one of its faces with a covering (3) with photocatalytic properties comprising titanium oxide at least partially crystallised in situ when the covering is formed on the substrate, **characterised in that** the said covering (3) constitutes the last layer of a stack of non-reflecting layers.

2. Substrate (1) according to Claim 1, **characterised in that** the titanium oxide is crystallised in the form of crystallites with a mean size of between 0.5 and 60 nm.

3. Substrate (1) according to Claim 1, **characterised in that** the covering also comprises a mineral material, in particular in the form of an oxide or an amorphous or partially crystallised mixture of oxides.

4. Substrate (1) according to Claim 3, **characterised in that** the oxide or mixture of oxides is chosen from amongst at least one of the following oxides: silicon dioxide, titanium oxide, tin oxide, zirconium oxide or aluminium oxide.

5. Substrate (1) according to Claim 1, **characterised in that** the surface of the covering (3) is hydrophilic, with in particular an angle of contact with the water of less than 5° after exposure to light radiation.

6. Substrate (1) according to Claim 1, **characterised in that** the said covering (3) has an RMS roughness of between 2 and 20 nm, in particular between 5 and 20 nm.

7. Substrate (1) according to Claim 1, **characterised in that** there is disposed, under the covering (3) with photocatalytic properties, at least one thin layer based on conductive material of the metal or doped metallic oxide type such as ITO, SnO₂:F, ZnO:In, ZnO:F, ZnO:Al, ZnO:Sn or a metallic oxide substoichiometric in oxygen such as SnO₂₋ₓ or ZnO₂₋ₓ with x < 2.

8. Substrate (1) according to one of the preceding claims, **characterised in that** the crystallised titanium oxide is in octahedryte form, in rutile form or in the form of a mixture of octahedryte and rutile.

9. Substrate (1) according to one of the preceding claims, **characterised in that** the titanium oxide is crystallised with a degree of crystallisation of at least 25%, in particular between 30% and 80%.

10. Substrate (1) according to one of the preceding claims, **characterised in that** the crystallised titanium oxide is in the form of crystallites with a mean size of between 1 and 50 nm, in particular 10 to 40 nm.

11. Substrate (1) according to one of the preceding claims, **characterised in that** the covering comprises additives able to amplify the photocatalytic phenomenon due to the titanium oxide, in particular by increasing the absorption band of the covering and/or by increasing the number of charge carriers by doping the crystalline lattice of the oxide or by surface doping of the covering and/or by increasing the yield and kinetics of the photocatalytic reactions by coating at least part of the covering with a catalyst.

12. Substrate (1) according to Claim 11, **characterised in that** the crystalline lattice of the titanium oxide is doped, in particular with at least one of the metallic elements in the group comprising niobium, tantalum, iron, bismuth, cobalt, nickel, copper, ruthenium, cerium and molybdenum.

13. Substrate (1) according to Claim 11, **characterised in that** the titanium oxide or the covering (3) overall is coated with a catalyst, in particular in the form of a thin layer of noble metal of the platinum, rhodium, silver or palladium type.

14. Substrate (1) according to Claim 11, **characterised in that** the covering incorporates metallic elements, in particular in the form of particles, aimed at increasing its absorption band, elements chosen from amongst tin, cadmium, tungsten, cerium or zirconium.

15. Substrate (1) according to Claim 11, **characterised in that** the surface doping of the titanium oxide or of the covering which comprises it is carried out by covering at least part of the said covering with a layer of oxide or metallic salts, the metal being chosen from amongst iron, copper, ruthenium, cerium, molybdenum, bismuth and vanadium.

16. Substrate (1) according to one of Claims 1, 2, 5, 6 or 7, **characterised in that** the surface of the covering (3) is oil absorbing.

17. Substrate (1) according to one of the preceding claims, **characterised in that** the thickness of the covering (3) is between 5 nm and 1 micron, in particular between 5 and 100 nm, preferably 10 to 80, in particular 20 to 50 nanometres.

18. Substrate (1) according to one of the preceding claims, **characterised in that** there is disposed under the covering (3) with photocatalytic properties at least one thin layer (2) with an anti-static function, possibly with controlled polarisation, with a thermal or optical function, or forming a barrier to the migration of alkalis coming from the substrate.

19. Substrate (1) according to Claim 18, **characterised in that** the thin layer (2) with an optical function is based on an oxide or a mixture of oxides whose refractive index is intermediate between that of the covering and that of the substrate, in particular chosen from amongst the following oxides: Al₂O₃, SnO₂, In₂O₃, or silicon oxycarbide or oxynitride.

20. Substrate (1) according to Claim 18, **characterised in that** the thin layer (2) with a function of barrier to alkalis is based on silicon dioxide, nitride, oxynitride or oxycarbide, Al₂O₃:F or aluminium nitride.

21. "Anti-soiling and/or anti-mist" glazing, monolithic or multiple of the double glazing or laminated type, incorporating the substrate (1) according to one of the preceding claims.

22. Application of the substrate (1) according to one of Claims 1 to 20 to the fabrication of "self-cleaning" glazing, anti-mist and/or anti-soiling, of the organic and/or mineral soiling type, in particular for buildings of the double glazing type, glazing for vehicles of the car windscreen, rear window or side window type, for trains or aircraft, or utility glazing such as aquarium glass, shop windows, greenhouses, interior furnishing, street furniture, or mirrors, television screens, or electrically controlled variable absorption glazing.

23. Method of obtaining the substrate (1) according to one of Claims 1 to 20, **characterised in that** the covering (3) with photocatalytic properties is deposited by liquid phase pyrolysis, in particular using a solution comprising at least one organometallic precursor of titanium of the titanium chelate and/or titanium alcoholate type.

24. Method of obtaining the substrate (1) according to one of Claims 1 to 20, **characterised in that** the covering (3) with photocatalytic properties is deposited by a sol-gel technique, with a deposition mode of the dipping or dip coating, cell coating, spray coating or laminar coating type, using a solution comprising at least one organometallic precursor of titanium of the titanium alcoholate type.

25. Method of obtaining the substrate (1) according to one of Claims 1 to 20, **characterised in that** the covering (3) with photocatalytic properties is deposited by vapour phase pyrolysis, CVD, using at least one titanium precursor of the halide or organometallic type.

26. Method of obtaining the substrate (1) according to one of Claims 1 to 21, **characterised in that** the covering (3) with photocatalytic properties is deposited by a vacuum technique such as cathodic sputtering, reactive or not.

27. Method according to one of Claims 23 to 26, **characterised in that** the covering (3) with photocatalytic properties is deposited in at least two successive steps.

28. Method according to one of Claims 23 to 27, **characterised in that** the covering (3) with photocatalytic properties is made to undergo, after deposition, at least one heat treatment of the annealing type.
